# Europäisches Patentamt

# European Patent Office

# Office européen des brevets

(19)

(11) Veröffentlichungsnummer: **0 121 283**
**B1**

(12) # EUROPÄISCHE PATENTSCHRIFT

(45) Veröffentlichungstag der Patentschrift:
**10.06.87**

(51) Int. Cl.⁴: **G 11 B 15/66**

(21) Anmeldenummer: **84200448.3**

(22) Anmeldetag: **28.03.84**

(54) **Vorrichtung zum Einführen und Auswerfen einer Magnetbandkassette in einem Magnetbandkassettengerät.**

(30) Priorität: **02.04.83 DE 3312136**
**11.04.83 NL 8301267**

(43) Veröffentlichungstag der Anmeldung:
**10.10.84 Patentblatt 84/41**

(45) Bekanntmachung des Hinweises auf die Patenterteilung:
**10.06.87 Patentblatt 87/24**

(84) Benannte Vertragsstaaten:
**CH DE FR GB IT LI**

(56) Entgegenhaltungen:
**FR-A-2 266 935**
**FR-A-2 433 220**
**US-A-3 485 500**
**US-A-3 669 456**
**US-A-3 947 884**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL- 5621 BA Eindhoven (NL)**
(84) Benannte Vertragsstaaten: **CH FR GB IT LI**

(72) Erfinder: **Deutsch, Armin, Berliner Ring 109, D-6330
Wetzlar (DE)**
Erfinder: **Ruyten, Henricus M., Volpertshäuser
Strasse 14, D-6330 Wetzlar (DE)**

(74) Vertreter: **Kupfermann, Fritz- Joachim, Philips
Patentverwaltung GmbH Billstrasse 80 Postfach
10 51 49, D-2000 Hamburg 28 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf eine Vorrichtung zum Einführen und Auswerfen einer Magnetbandkassette in einem Magnetbandkassettengerät mit einem Gestell, einem mit einer Durchführungsöffnung für die Kassette versehenen Kassettenhalterung, einem Kassettenmitnehmer, der mit einem Hebel gekuppelt ist, der um eine auf dem Gestell vorhandene Schwenkachse schwenkbar ist, einer in dem Gestell verschiebbar geführten Betätigungsstange, die an einem Ende ein Betätigungsorgan trägt, die mit einer Feder zusammenwirkt, welche Feder den Mitnemer mit der Kassette zu der von der Durchführungsöffnung abgewandten Seite der Kassettenhalterung verschiebt, wobei die Feder als Druckfeder ausgebildet ist, die an der Betätigungsstange und dem Hebel angelenkt ist, wobei der Anlenkungspunkt auf der Betätigungsstange und auf dem Hebel derart gegenüber der Schwenkachse des Hebels liegen, daß während der Betätigung des Betätigungsorganes und der Schwenkbewegung des Hebels der Anlenkpunkt auf dem Hebel durch eine Ebene durch die Schwenkachse und den Anlenkungspunkt auf der Betätigungsstange geht, wonach die Feder den Hebel weiterschwenkt und die Kassette auswirft.

Eine derartige Vorrichtung ist aus der DE-OS 16 22 965 bekannt. Die Vorrichtung hat dabei eine Vielzahl von Hebeln, die mit der Druckfeder zusammenwirken. Es ist ein Auswerfer und ein Einzugshebel vorgesehen, die von der Feder beim Passieren der Totpunktebene durch einen Schwenkpunkt des einen Hebels und den Anlenkungspunkt an einem anderen Hebel unter Wirkung der Feder die Kassette einziehen bzw. auswerfen. Infolge der Anordnung vieler Unterteile ist der Weg des automatischen Einzugs und Auszugs unter Wirkung der Feder begrenzt. Alle Einzelteile wirken miteinander zusammen, wodurch leicht Störungen auftreten können.

Die Erfindung hat zur Aufgabe, die bekannte Vorrichtung derart auszubilden, daß die Feder beim Einführen sowie beim Auswerfen eine optimale Wirkung hat und die Belastung des Gestells so gering wie möglich ist.

Die gestellte Aufgabe ist erfindungsgemäß dadurch gelöst, daß

- die Feder unmittelbar an der Betätigungsstange angelenkt ist,
- der Stift auf der Betätigungsstange sich während des Einführens der Kassette längs einer Steuerkante auf dem Hebel bewegt und dabei den Hebel weiterschwenkt bis zum Erreichen der Endstellung der Kassette,
- die Steuerkante und eine Anschlagkante Teile einer schlitzförmigen Ausnehmung in dem Hebel sind, wobei der Stift beim Wirken des Betätigungsorgans gegen die Anschlagkante drückt und längs dieser Anschlagkante entlang läuft unter Wirkung der Druckfeder beim Schwenken des Hebels, wobei die Kassette ausgeworfen wird.

Durch die direkte Verbindung der Feder mit dem Hebel und der Betätigungsstange wird die Federkraft auf möglichst direkte Weise auf den Hebel und die Betätigungsstange ausgeübt und kann eine ungünstige Belastung des Gestells vermieden werden. Durch die Auswahl dieser Maßnahmen kann einerseits nach kurzem manuellem Einschieben der Kassette ein relativ langer automatischer Einzug unter Einwirkung der Feder erfolgen, während beim Auswerfen auf einen relativ kurzen Hub der Betätigungsstange ein relativ langer automatischer Auswurfweg durchlaufen wird. Dadurch wird der weitere Vorteil erhalten, daß der letzte Teil des Auswerfvorganges der Kassete unter Ausübung einer gut regelbaren Kraft, die von der Feder herrührt, erfolgt, wodurch die Kassette im letzteren Teil der Bewegung in dem Lift eine nicht große Geschwindigkeit aufweist, und vermieden wird, daß die Kassette aus dem Lift herausschießt. Dies ist vorteilhaft, beispielsweise bei Verwendung eines derartigen Magnetbandkassettengerätes in einem Kraftwagen. Außerdem ergibt sich eine gedrängte Konstruktion mit einer geringen Anzahl von Einzelteilen, was beispielsweise für im Kraftwagen verwendete Geräte wichtig ist.

Eine bevorzugte Ausführungsform einer erfindungsgemäßen Vorrichtung weist dazu das Kennzeichen auf, daß die Anschlagkante auf einem relativ langen Schenkel und die Steuerkante auf einem relativ kurzen Schenkel der Ausnehmung liegen.

Die schlitzförmig ausgebildete Ausnehmung ergibt eine praktische und wirksame Führung für den Stift, wobei durch die längere Anschlagkante gewährleistet wird, daß unmittelbar nach Beendigung der Auswurfbewegung und Loslassen der Auswurftaste der Stift aufs Neue die Lage am Anfang der Steuerkante einnimmt.

Ein Ausführungsbeispiel der Erfindung ist in der Zeichnung dargestellt. Es zeigen:

Fig. 1 eine Draufsicht eines Magnetbandkassettengerätes mit einer Vorrichtung, wobei nicht wesentliche Teile weggelassen sind und wobei die Vorrichtung in einer Lage liegt, die auftritt, wenn eine Kassette ausgeworfen ist.

Fig. 2 in vergrößertem Maßstab einen Teil des der Vorrichtung zugeordneten Hebels sowie die Bahn, der der Stift zum Hebel beim Einführen und Auswerfen folgt,

Fig. 3 Draufsicht des Gerätes nach Fig. 1, wobei die Vorrichtung in einer Lage liegt, die auftritt, wenn die Kassette völlig eingezogen ist.

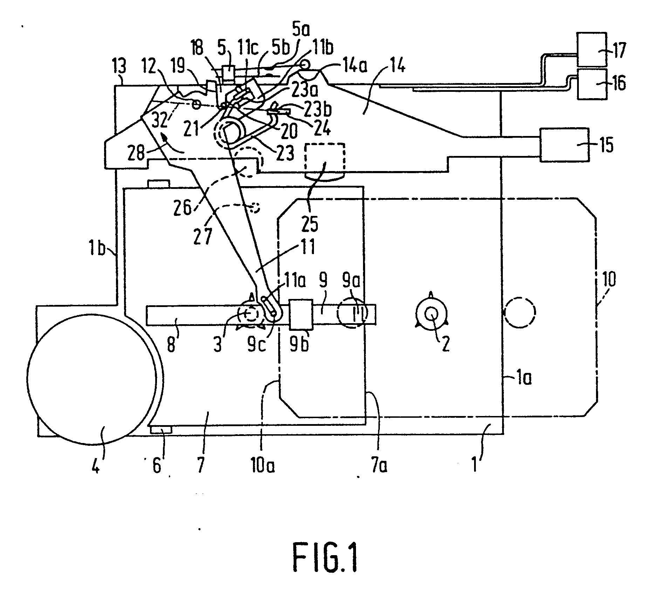

Das in Fig. 1 dargestellte Magnetbandkassettengerät umfaßt ein Gestell 1. In dem Gestell 1 sind zwei Wickelkerne 2 und 3 drehbar gelagert, wobei die Wickelkerne über ein nicht dargestelltes Getriebe im Betrieb von einem Motor 4 angetrieben werden können. Dabei kann die elektrische Verbindung des Motors 4 von einem mit dem Gestell 1 verbundenen elektrischen Motorschalter 5 mit Kontakten 5a und 5b geschaltet werden. Das Gestell 1 weist eine offene Vorderseite 1a auf. Das Gestell 1 trägt weiterhin einen um eine Schwenkachse 6 schwenkbaren Kassettenlift 7. Die Schwenkachse 6 erstreckt sich parallel zu der Vorderseite 1a des Gestells und ist vorzugsweise in der Nähe der Rückseite 1b des Gestells 1, wo ebenfalls der Motor 4 liegt, angeordnet. In dem Kassettenlift 7 ist ein Führungsschlitz 8 vorhanden, in dem ein vorzugsweise aus Kunststoff hergestellter Kassettenmitnehmer 9 schiebbar geführt ist. Der Mitnehmer 9 enthält in der Nähe des freien Endes einen sich in Richtung des Gestells 1 erstreckenden Vorsprung 9a, der durch die elastische Ausbildung des Mitnehmers 9 und die Lage des Vorsprunges 9a in der Nähe des freien Endes in ein Wickeldornloch einer Magnetbandkassette 10 einfedern kann, wenn eine Kassette vom Benutzer in das Gerät gesteckt wird. Der Mitnehmer 9 wird mittels eines Teils 9b in den Schlitz 8 geführt. In der Nähe des hinteren Endes ist der Mitnehmer 9 mit einem Stift 9c versehen. Dieser Stift 9c dient als Anschlag für den Seitenrand 10a der Kassette und greift durch einen Schlitz 11a eines Hebels 11 der mit dem Gestell 1 über eine Schwenkachse 12 schwenkbar verbunden ist. Die Schwenkachse 12 liegt in der Nähe einer sich zwischen der Vorderseite 1a und der Rückseite 1b erstreckenden Längsseite 13 des Gestells 1. Im Gestell 1 parallel bewegbar zu der Längsseite 13 erstreckt sich eine Betätigungsstange 14, die vorzugsweise aus einem blechförmigen Material hergestellt ist und sich bis außerhalb der Vorderseite 1a des Gestells erstreckt und dort mit einer Auswurftaste 15 verbunden ist. Das Magnetbandkassettengerät ist weiterhin mit zwei Betätigungstasten 16 und 17 versehen, die auf nicht dargestellte Weise den schnellen Vorlauf bzw. Rücklauf des Magnetbandes in der Magnetbandkassette 10 steuern.

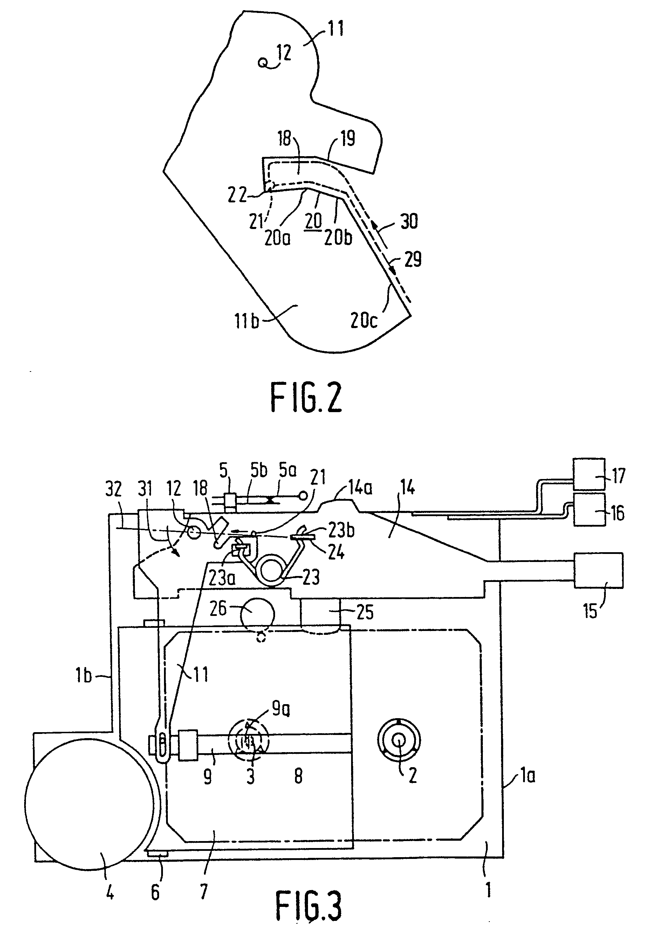

Der Hebel 11 ist mit einer schlitzförmigen Ausnehmung 18 versehen, die mit einem langen Schenkel und einem kurzen Schenkel versehen ist. Die Ausnehmung 18 ist zugleich in Fig. 2 dargestellt. Der kurze Schenkel bildet eine Steuerkante 20 und der lange Schenkel eine Anschlagkante 19 für einen auf der Betätigungsstange 14 vorhandenen Stift 21. In der in Fig. 1 und 2 dargestellten Lage, in der die Betätigungsstange 14 nahezu völlig eingeschoben ist, liegt der Stift 21 in einer Ecke 22 der Ausnehmung 18. Dies ist die Lage des Stiftes 21, wenn die Kassette ausgeworfen ist bzw. eine neue Kassette im Begriff ist, eingeführt zu werden.

Der Hebel 11 umfaßt weiterhin eine Zunge 11b, die sich an den die Steuerkante 20 bildenden kurzen Schenkel anschließt. Die Zunge 11b ist mit einem Befestigungselement 11c für eine Druckfeder 23 versehen, die als Schenkelfeder ausgebildet ist und die weiterhin mit einem Befestigungselement 24 auf der Betätigungsstange 14 verbunden ist. Hierbei liegt die Feder 23 mit Befestigungspunkten 23a, 23b an gegen die Befestigungselemente 11c bzw. 24. Die Betätigungsstange 14 ist mit einer Auflauffläche 14a versehen, die in der in Fig. 1 dargestellten Lage den Kontakt 5a in einem Abstand vom Kontakt 5b hält, wodurch der Motor 4 abgeschaltet ist.

Wie in Fig. 1 auf schematische Weise dargestellt, umfaßt das Magnetbandkassettengerät weiterhin einen Magnetkopf 25 und eine Anpreßrolle 26, die auf einer nicht dargestellten Kopfplatte liegen. Das Gestell 1 trägt eine Tonwelle 27, die im Betrieb von dem Motor 4 drehend angetrieben wird.

Beim Einführen einer Kassette 10 wird die Kassette über die Durchführungsöffnung 7a des Liftes 7 wenigstens teilweise geschoben. Dies ist die in Fig. 1 dargestellte Lage. In dieser Lage liegt der Mitnehmer 9 mit dem sich in Richtung des Gestells 1 erstreckenden Vorsprung 9a in dem Wickeldornloch der Kassette geklemmt, während die Seitenwand 10a der Kassette 10 gegen den Stift 9c drückt. Durch die Tatsache, daß die Kassette 10 von Hand in den Lift 7 gedrückt wird, wird nun der Hebel 11 um die Schwenkachse 12 in Richtung des Pfeiles 28 in Fig. 1 weggeschwenkt. Dies führt dazu, daß der Mitnehmer 9 in dem Führungsschlitz 8 gleitet, bis der Stift 9c die Rückseite des Liftes 7 erreicht hat. Durch die Schwenkbewegung des Hebels 11 ist der Stift 21 aus der Ecke 22 bewegt und liegt längs der Steuerkante 20 auf dem Hebel, wobei der Stift nach der Bewegung längs eines Teils 20a am Eckpunkt vorbeigegangen ist, der auf dem Anschluß des Teils 20a an den Teil 20b der Steuerkante liegt, wobei der Stift relativ zum Hebel 11 eine Bahn beschreibt, die durch den Pfeil 29 in Fig. 2 angegeben ist. Nachdem der Stift an dem Eckpunkt zwischen dem Teil 20a und dem Teil 20b vorbeigelaufen ist, gelangt er unter den Einfluß der von der Feder 23 auf die Betätigungsstange 14 ausgeübten Kraft, wodurch der Hebel 11 durch die Feder weitergeschwenkt wird. Durch diese Verschwenkung wird der Mitnehmer 9 mit der damit gekuppelten Kassette 10 in Richtung der bei der Rückseite 1b des Gestells liegenden Seite des Kassettenliftes geschoben, ohne daß dazu von außen her Kraft auf die Kassette ausgeübt zu werden braucht. Am Ende der Bewegung längs der Steuerkante 20 gleitet der Stift 21 längs eines Teils 20c der Steuerkante, welcher Teil infolge der Verschwenkung des Hebels 11 inzwischen parallel zu der Längsseite 13 des Gestells 1 liegt. Auf diese Weise kann der Stift 21 ungehemmt in Richtung der Vorderseite 1a des Gestells gleiten, wobei die Betätigungsstange 14 mit der Auswurftaste 15 in Richtung bis an einen nicht dargestellten Anschlag verschoben wird. Während dieser Bewegung ist die Auflauffläche 14a frei geworden von dem Kontakt 5a, wodurch der Motorschalter 5 geschlossen ist und der Motor 3 zu drehen angefangen hat. Gleichzeitig ist bei der Bewegung der Betätigungsstange 14 mittels einer nicht dargestellten Kupplung zwischen der Betätigungsstange 14 und dem Kassettenlift 7 der Lift 7 in Richtung des Gestells 1 um die Schwenkachse 6 geschwenkt, wodurch die Naben der Kassette 10 mit den Wickelkernen 2 und 3 gekuppelt sind. Unmittelbar nach dieser Bewegung ist die nicht dargestellte Kopfplatte in Richtung der Kassette geschoben wodurch der Magnetkopf 25 mit dem Magnetband zusammenarbeitet und die Anpreßrolle 26 gegen die Tonwelle 27 gedrückt ist. Zu dem Zeitpunkt erfolgt der Bandtransport und fängt das Gerät mit der Wiedergabe und/oder Aufnahme von Signalen auf dem Magnethand an. Diese Lage ist in Fig. 3 dargestellt.

Wenn der Henutzer die Magnetbandkassette 10 auswerfen will, wird die Auswurftaste 15 in Richtung der Vorderseite 1a des Gestells 1 gedrückt. Dabei bewegt sich die Betätigungsstange 14 wieder in die in Fig. 1 dargestellte Stellung. Dies führt dazu, daß sich der Stift 21 nun aufs Neue längs des Teils 20c der Steuerkante bewegt, und zwar entsprechend einem Pfeil 30 in Fig. 2. Der Stift 21 bewegt sich weiter in der Richtung entsprechend dem Pfeil 30, bis der Stift die Anschlagkante 19, die durch den langen Schenkel der Ausnehmung 18 gebildet wird, erreicht hat.

Danach bewegt sich der Stift 21 relativ zur Anschlagkante 19, wobei dieser Stift auf den Hebel 11 ein Moment um die Drehachse 12 ausübt und wobei sich der Hebel 11 in Richtung entsprechend dem Pfeil 31 in Fig. 3 bewegt. Dabei drückt der Stift 9c gegen die Seitenwand 10a der Kassette und schiebt die Kassette in Richtung der Vorderseite 1a des Gestells. Vor dieser Bewegung ist der Lift 7 hochgeschwenkt um die Achse 6 und ist der Schalter 5 aufs Neue geöffnet durch eine Kupplung zwischen der Auflauffläche 14a und dem Kontakt 5a. Der Magnetkopf 25 und die Anpreßrolle 26 sind wieder in die in Fig. 1 dargestellte zurückgezogene Lage gelangt. Während der Verschiebung der Betätigungsstange 14 ist der Befestigungspunkt 23a der Feder 23 auf dem Hebel 11 durch eine Ebene 32 durch die Schwenkachse 12 und den Befestigungspunkt 23b auf der Betätigungsstange gegangen, und zwar in Fig. 3 von der unteren zu der oberen Seite der Ebene 32. Durch diesen Durchgang durch die Ebene 32 wird die Feder 23 ein positives Moment um die Drehachse 12 ausüben und läßt den Hebel 11 in Richtung des Pfeiles 31 weiter schwenken. Dabei bewegt sich der Stift 21 weiter relativ zur Anschlagkante 19. Durch diese Verschwenkung unter dem Einfluß der Feder 23 wird die Kassette ausgeworfen. Am Ende der Bewegung ist der Stift 21 nach Loslassen der Tasten aufs Neue in die Ecke 22 gelangt. Die beschriebene Konstruktion bietet den Vorteil, daß die Feder beim Einführen der Kassette während der Relativbewegung zum Wandteil 20b der Steuerkante 20 auf die Kassette eine positive Einziehkraft ausübt und diese Kassette während des letzten Teils der Einschiebebewegung den Lift 7 führt, während beim Auswerfen die Feder nach Durchgang durch die genannte Ebene 32 selbständig das Auswerfen der Kassette besorgt. Die dabei verwendete Schenkelfeder 23 ermöglicht eine gedrängte Anordnung, was auch durch die schlitzförmige Ausbildung der Ausnehmung 18 in dem Hebel gefördert wird, der die Steuerkante 20 sowie die Anschlagkante 19 trägt. Beim Auswerfen drückt der Stift 21 gegen die Anschlagkante 19, wobei der Stift den Anfang der Schwenkbewegung des Hebels entsprechend dem Pfeil 31 besorgt, bis die Feder 23 den Endteil der Schwenkbewegung steuert. Ein besonderer Vorteil dabei besteht darin, daß jeweils der letzte Teil der Einführungsbewegung der Kassette bzw. der letzte Teil der Auswurfbewegung der Kassette nicht von Hand, sondern durch Federkraft erfolgt. Die Einführungs- bzw. Auswurfkräfte bei der erfindungsgemäßen Vorrichtung, die aus dem Hebel 11, der Feder 23, der Betätigungsstange 14 und dem damit verbundenen Stift 21 sowie dem Mitnehmer 9 besteht, können wegen des beschränkten Raumes, der dazu beansprucht wird, auf einfache und preisgünstige Weise erhalten werden. Die Vorrichtung eignet sich insbesondere für Magnetbandkassettengeräte zum Einbauen in Kraftwagen.

**Patentansprüche**

1. Vorrichtung zum Einführen und Auswerfen einer Magnetbandkassette (10) in einem Magnetbandkassettengerät mit einem Gestell (1), einem mit einer Durchführungsöffnung (7a) für die Kassette versehenen Kassettenhalterung, einem Kassettenmitnehmer (7), der mit einem Hebel (11) gekuppelt ist, der um eine auf dem Gestell vorhandene Schwenkachse (12) schwenkbar ist, einer in dem Gestell verschiebbar geführten Betätigungsstange (14), die an einem Ende ein Betätigungsorgan (15) trägt, die mit einer Feder (23) zusammenwirkt, welche Feder den Mitnehmer (7) mit der Kassette (10) zu der von der Durchführungsöffnung (7a) abgewandten Seite (1b) der Kassettenhalterung verschiebt, wobei die Feder als Druckfeder ausgebildet ist, die an der Betätigungsstange (14) und dem Hebel (11) angelenkt ist, wobei der Anlenkungspunkt auf der Betätigungsstange und auf dem Hebel derart gegenüber der Schwenkachse (12) des Hebels (11) liegen, daß während der Betätigung des Betätigungsorganes (15) und der Schwenkbewegung des Hebels der Anlenkpunkt auf dem Hebel durch eine Ebene durch die Schwenkachse und den Anlenkungspunkt auf der Betätigungsstange geht, wonach die Feder den Hebel weiterschwenkt und die Kassette auswirft, dadurch gekennzeichnet, daß
   - die Feder (23) unmittelbar (23b) an der Betätigungsstange (14) angelenkt ist,
   - ein Stift (21) auf der Betätigungsstange (14) sich während des Einführens der Kassette längs einer Steuerkante (20) auf dem Hebel (11) bewegt und dabei den Hebel (11) weiterschwenkt bis zum Erreichen der Endstellung der Kassette,
- die Steuerkante (20) und eine Anschlagkante (19) Teile einer schlitzförmigen Ausnehmung (18) in dem Hebel (11) sind, wobei der Stift (21) beim Wirken des Beträtigungsorgans (15) gegen die Anschlagkante (19) druckt und längs dieser Anschlagkante (19) entlang läuft unter Wirkung der Druckfeder (23) beim Schwenken des Hebels (11), wobei die Kassette ausgeworfen wird.

2. Vorrichtung nach Anspruch 1, dadurch gekennzeichnet, daß die Anschlagkante (19) auf einem relativ langen Schenkel und die Steuerkante (20) auf einem relativ kurzen Schenkel der Ausnehmung (18) liegen.

## Claims

1. A device for inserting a magnetic tape-cassette (10) into and ejecting it from a magnetic-tape-cassette apparatus comprising a frame (1), a cassette holder with an insertion opening (7a) for the cassette, a cassette driver (7) which is coupled to a lever (11) which is pivotable about a pivoting spindle (12) arranged on the frame, an actuating rod (14) which is movably guided in the frame, which carries an actuating member (15) on one end, which co-operates with a spring (23), which moves the driver (7) with the cassette (10) towards that side (13) of the cassette holder which is remote from the insertion opening (7a), which spring is a compression spring and is secured to the actuating rod (14) and the lever (11), the points of attachment of the spring to the actuating rod and the lever being arranged in such a manner relative to the pivoting spindle (12) of the lever (11) that during actuation of the actuating member (15) and the pivotal movement of the lever the point of attachment on the lever passes through a plane containing the pivoting spindle and the point of attachment on the actuating rod, after which the spring pivots the lever further and ejects the cassette, characterized in that
- the spring (23) is connected directly to the actuating rod (14),
- the actuating rod (14) is provided with a pin (14) which during
insertion of the cassette moves past a control edge (20) on the lever (11), the lever (11) being pivoted further until the cassette reaches the end position,
- the control edge (20) and a stop edge (19) are wall portions of a slot (18) in the lever (11), the pin (21) being urged against the stop edge (19) during actuation of the actuating member (15) and being moved along this stop edge (19) during the pivotal movement of the lever (11) under the influence of the compression spring (23), thereby ejecting the cassette.
2. A device as claimed in Claim 1, characterized in that the stop edge (19) is situated in a relatively long branch and the control edge (20) in a relatively short branch of the slot (18).

## Revendications

1.- Dispositif de chargement et d'éjection d'une cassette de bande magnétique (10) dans un appareil à cassette de bande magnétique comportant un bâti (1), un support de cassette pourvu d'une ouverture de passage (7a) pour la cassette, un entraîneur de cassette (7), qui est couplé à un levier (11) qui peut pivoter autour d'un axe de pivotement (12) présent sur le bâti, une tige d'actionnement (14) guidée mobile dans le bâti, qui, sur une extrémité, porte un organe d'actionnement (15) qui coopère avec un ressort (23) qui déplace l'entraineur (7) avec la cassette (10) vers le côté (1b) du support de cassette opposé à l'ouverture de passage (7a), le ressort ayant la forme d'un ressort de pression qui est articulé à la tige d'actionnement (14) et au levier (11), les points d'articulation sur la tige d'actionnement et sur le levier étant disposés par rapport à l'axe de pivotement du levier d'une manière telle que, pendant l'actionnement de l'organe d'actionnement (15) et le mouvement de pivotement du levier, le point d'articulation sur le levier passe par un plan passant par l'axe de pivotement et le point d'articulation sur la tige d'actionnement, après quoi le ressort fait pivoter le levier davantage et éjecte la cassette, caractérisé en ce que
- le ressort (23) est articulé directement (23b) à la tige d'actionnement (14),
- un ergot (21) sur la tige d'actionnement (14) se deplace pendant l'introduction de la cassette le long d'un bord de comnande (20) sur le levier (11) et fait ainsi pivoter le levier (11) davantage jusqu'à ce que la position d'extrémité de la cassette soit atteinte,
- le bord de commande (20) et un bord de butée (19) font partie d'une encoche en forme de fente (18) dans le levier (11), de façon que lorsque l'organe d'actionnement (15) fonctionne, l'ergot (21) exerce une pession contre le bord de butée (19) et se déplace le long de ce bord de butée (19) sous l'action du ressort de pression (23), lorsque le levier (11) pivote, ce qui a pour effet d'éjecter la cassette.

2.- Dispositif suivant la revendication 1, caractérisé en ce que le bord de butée (19) est disposé sur un flanc relativement long et le bord de commande (20) sur un flanc relativement court de l'encoche (18).

FIG.1

FIG.2

FIG.3